# FASCICULE DE BREVET EUROPEEN

(11) **EP 0 737 040 B1**
(45) Date de publication et mention de la délivrance du brevet: **26.08.1998**
(21) Numéro de dépôt: 95905162.4
(22) Date de dépôt: 23.12.1994
(51) Int. Cl.: A41D 31/02

(54) **ETOFFE POUR LA CONFECTION ET LE DECOR**
STOFF UM BEKLEIDUNG UND DEKORATION HERZUSTELLEN
FABRIC FOR THE CLOTHING INDUSTRY AND INTERIOR FURNISHINGS

(30) Priorité: 30.12.1993 FR 9315929
(43) Date de publication de la demande: 16.10.1996
(73) Titulaire: Roualdes, Bruno, 75006 Paris (FR); Coerezza, Santina, 75006 Paris (FR)
(72) Inventeur: Roualdes, Bruno, 75006 Paris (FR); Coerezza, Santina, 75006 Paris (FR)
(74) Mandataire: Lejet, Christian
(86) Numéro de dépôt international: FR9401526
(87) Numéro de publication internationale: WO9517834

(56) Documents cités:
- EP-A- 0 481 106
- WO-A-92/20533
- FR-A- 2 088 105

## Description

La présente invention concerne une étoffe pour la confection et le décor, plus particulièrement destinée notamment à l'habillement, l'ameublement, la décoration et la scénographie.

Le but principal de la présente invention est d'obtenir un matériau souple, extérieurement esthétique, gardant sa forme après déformation et, donc, sans retour élastique ou plastique conséquent. Sa souplesse doit être telle que l'on puisse aisément le déformer manuellement.

Avec un tel matériau, on peut donc marquer des plis, varier la forme de nombreuses fois successives, ce qui permet une réutilisation de l'étoffe finale en habillement, ameublement, décoration, scénographie, ou équivalent, étoffe qui peut ainsi changer d'esthétique dans sa perception géométrique, y compris sculpturale.

L'étude menée a abouti à une étoffe complexe combinant des matières souples, telles que peaux, tissus ou papiers, structurées avec une âme métallique apportant une consistance dans sa rigidité souple, de telle sorte que l'étoffe présente des qualités de souplesse, de déformation aisée sans retour élastique conséquent et de bonne tenue sous son propre poids.

On connait, dans le domaine, différents documents. Par exemple, le document EP-A-0 481 106 décrit un élément de décoration comprenant une couche de caoutchouc magnétique, une couche d'aluminium et une couche de cuir, permettant de donner diverses formes au dit élément. La couche de caoutchouc magnétique permet de fixer aisément l'élément sur tout matériau ferreux après mise en forme souhaitée du dit élément. Un tel élément de décoration, du fait même de l'épaisseur requise, ne peut pas être utilisé pour des besoins d'habillement et est d'utilisation tout à fait limitée. En outre, il ne peut pas présenter un pliage correct de grand angle.

Le document FR-A-2 088 105 décrit une bande déformable élastiquement permettant de réaliser des appuis élastiques. Ce document est donc contraire à l'esprit de l'invention pour laquelle il ne doit pas y avoir de retour élastique ou plastique.

Le document EP-A-0 585 288 décrit, pour sa part, un laminé flexible en matériau plastique pouvant porter une image holographique.

Tous ces documents sont donc très éloignés de la présente invention.

L'invention concerne donc une étoffe présentant une structure stratifiée comprenant des matières souples, telles que peaux, tissus et/ou papiers, et au moins un matériau métallique, cette étoffe étant déformable manuellement sans retour élastique ou plastique notable.

Selon l'invention, cette structure comprend :
- une âme métallique sensiblement plane comprenant essentiellement un métal non ferreux, cette âme présentant une épaisseur inférieure à 0,15 mm apportant de la consistance pour une rigidité souple, et dont l'épaisseur et le traitement métallurgique sont adaptés au poids des matières souples ; et
- un revêtement des matières souples collé de part et d'autre de l'âme.

Selon un premier mode de réalisation, l'âme métallique est constituée par une feuille de métal non ferreux, feuille pouvant être éventuellement réalisée sous forme d'une grille simple ou tissée.

Selon un autre mode de réalisation, l'âme est constituée par une couche d'éléments particulaires métalliques de type paillettes, lamelles, clinquants ou fils simples, noyés dans un liant souple.

De préférence, l'âme est, d'abord, recouverte, au moins partiellement, d'un film en une matière plastique, tel du polyéthylène de haute densité, d'une épaisseur de 0,05 mm environ, ce film adhérant à l'âme.

Des essais ont montré que le métal non ferreux doit présenter, de façon préférentielle, une pureté très élevée et être choisi dans le groupe comprenant l'aluminium, le cuivre, l'étain, le bronze, le laiton, l'argent, l'or, le béryllium et les alliages de ceux-ci.

L'invention sera mieux comprise, et d'autres buts, avantages et caractéristiques de celle-ci apparaîtront plus clairement à la lecture de la description qui suit de modes préférés de réalisation donnés à titre non limitatif.

Comme l'homme du métier l'aura compris, l'étoffe selon l'invention comprend essentiellement une structure stratifiée comprenant au moins trois couches, c'est à dire une âme métallique disposée entre deux feuilles d'un revêtement constitué par un matériau souple conventionnel, tel une peau, un tissus ou un papier décoratif.

Les trois couches sont collées ensemble. Les colles utilisables sont celles utilisées notamment dans l'industrie de la chaussure et de l'habillement. Une colle à large usage sera préférentiellement une colle stabilisée ne nécessitant pas de réactivation. Elle est stabilisée dans sa consistance déterminant son interaction mécanique avec le revêtement. C'est le cas d'un adhésif double face appliqué par transfert sous pression. Cette colle ne sera donc pas coulante, ni diffusante, mais pénétrera partiellement dans le revêtement par pression, ce qui déterminera, complémentairement au pouvoir adhésif, un accrochage mécanique dans le revêtement. La colle aura, en outre, un effet de liant avec les autres composants de l'étoffe finale.

L'épaisseur de la couche de colle transférée est comprise entre 20 µ et 2 mm environ, et est, de préférence, de l'ordre de 50 µ environ pour favoriser cet accrochage mécanique et pour limiter la masse de colle, de telle sorte que cette masse soit de faible incidence sur les caractéristiques de l'étoffe finale qui doit être de rigidité souple, sans retour élastique ou plastique conséquent. Bien évidemment, cette masse de colle peut être réduite par un dépôt discontinu sous forme de points, par exemple, uniformément répartis sur toute la surface à coller, ou bien sous forme d'une grille déterminant des zones sans colle. Dans des exemples de réalisation, on a utilisé entre 2 et 8 grammes de colle par m² environ.

En outre, le collage doit être choisi pour présenter au moins les propriétés suivantes : être peu ou pas sensible aux produits utilisés pour un nettoyage ultérieur de l'étoffe finale ; ne pas migrer exagérément au travers du revêtement ; n'altérer ni la souplesse ni la dureté de l'étoffe finale après sèchage ; ne pas favoriser un retour élastique ou plastique après de multiples pliages de l'étoffe finale.

On comprendra que cette colle pourra être constituée par un adhésif acrylique ou par solvant et élastomère pulvérisés, mais ces indications n'ont nullement un caractère limitatif. En effet, un collage chimique ou un thermo-collage peut être tout à fait favorablement utilisé en fonction des différentes propriétés souhaitée de l'étoffe finale, et du type même du revêtement souple choisi. De toutes façons, la colle a un effet de liant quant aux composants de l'étoffe finale.

L'âme métallique est sensiblement plane et est réalisée dans un métal non ferreux. Ce métal, si possible présentant une pureté très élevée, est favorablement choisi dans le groupe comprenant l'aluminium, le cuivre, l'étain, le bronze, le laiton, l'argent, l'or, le béryllium et les alliages de ceux-ci. Toutefois, l'aluminium est le métal préféré, car il est l'un des moins denses et des plus résistants aux cycles itératifs de pliage, notamment lorsque sa pureté est supérieure à 99 %, et des moins coûteux.

Ce métal recevra au moins un traitement métallurgique préalable choisi dans le groupe comprenant une opération thermique de recuisson, un dégraissage, une anodisation, une désoxydation et les mélanges de ces traitements. De toute évidence, ce traitement doit être adapté, certes, à l'esthétique de l'étoffe finale, mais surtout au type de collage choisi pour le revêtement.

L'épaisseur de l'âme est comprise entre 30 µ et 90 µ environ. Selon les applications, l'épaisseur préférée sera de l'ordre de 30 µ ou de 70 µ environ.

L'âme peut être réalisée de diverses manières. Elle peut, par exemple, être réalisée sous forme d'une fine feuille continue du métal non ferreux choisi, mais elle peut également être réalisée sous forme d'une grille simple ou tissée. Elle peut également être constituée par une couche d'éléments particulaires métalliques de type paillettes, lamelles, clinquants ou fils simples tissés ou non, noyés dans un liant souple, telle une résine synthétique, du latex ou un acrylique en solution.

Le métal, le mode de réalisation et le traitement thermique associé forment un ensemble sensiblement indissociable pour obtenir les qualités recherchées, notamment une très grande résistance aux cycles répétés de pliage, sans froissage, ni cisaillement, ni déchirure notable, ni écrouissage.

Il faut noter que l'âme peut favorablement être constituée de plusieurs types joints des modes précités de réalisation, de manière, par exemple, à renforcer les extrémités de l'étoffe finale, tout en laissant une grande souplesse dans les zones présumées être les plus sollicitées à de multiples pliages.

Dans le but d'améliorer ces dernières qualités, il est possible, mais non obligatoire, de plaquer, au moins partiellement sur l'âme métallique, un film en une matière plastique avant de coller le revêtement souple. Un tel film peut être réalisé dans un matériau issu de l'industrie pétro-chimique, par exemple, un polyéthylène de haute densité ou un polyester, d'une épaisseur de l'ordre de 50 µ environ. Ce film pourra adhérer naturellement à l'âme ou bien être collé sur l'âme en fonction de sa nature.

Le revêtement souple associé peut être favorablement une peau, un tissus, tissé ou non-tissé, ou du papier, en fonction de l'esthétique finale recherchée. Il est cependant évident qu'un matériau ne gardant pas la mémoire des plis est préféré. Un matériau non-tissé obtenu par flocage est également préféré, car il présente une très grande souplesse même très fin. Ce revêtement pourra également être constitué de papiers agglomérés ou non. Lorsque le revêtement comprend une couche de peaux, celle-ci aura une épaisseur comprise entre 0,3 et à 1 mm environ et, de préférence, de l'ordre de 0,6 mm environ, de manière à conserver la souplesse de l'étoffe finale.

Pour éviter un problème de transparence ponctuelle, de non-stabilité ou de non-uniformité des coloris dans l'étoffe finale, il peut être judicieux de colorer le film précité ou d'ajouter dans la stratification, entre l'âme et le revêtement une très fine doublure. On pourra également ajouter une fine mousse pour réduire encore la mémoire des plis de l'étoffe finale.

L'homme du métier aura compris que l'on obtient ainsi une étoffe finale dont la forme peut être facilement modifiée manuellement de nombreuses fois de façon substantiellement stable, c'est à dire sans retour élastique ou plastique notable. A noter qu'une telle étoffe peut éventuellement constituer, en outre, une cage de Faraday.

Bien que l'on ait décrit ce que l'on considère actuellement être les modes de réalisation préférés de la présente invention, il est évident que l'Homme de l'Art pourra y apporter différents changements et modifications sans sortir du cadre de la présente invention tel que défini par les revendications jointes.

## Revendications

1. Étoffe présentant une structure stratifiée comprenant des matières souples, telles que peaux, tissus et/ou papier, et au moins un matériau métallique, la dite étoffe étant déformable manuellement sans retour élastique ou plastique et la dite structure comprenant:
- une âme métallique sensiblement plane comprenant essentiellement un métal non ferreux et
- un revêtement des dites matières souples collé de part et d'autre de la dite âme,
**caractérisée en ce que**
la dite âme présente une épaisseur inférieure à 0,15 mm apportant de la consistance pour une rigidité, et dont l'épaisseur et le traitement métallurgique sont adaptés au poids des dites matières souples.

2. Étoffe selon la revendication 1 caractérisée en ce que la dite âme métallique est constituée par une feuille du dit métal non ferreux.

3. Étoffe selon la revendication 2 caractérisée en ce que la dite feuille est réalisée sous forme d'une grille simple ou tissée.

4. Étoffe selon la revendication 1 caractérisée en ce que la dite âme est constituée par une couche d'éléments particulaires métalliques de type paillettes, lamelles, clinquants ou fils simples, noyés dans un liant souple.

5. Étoffe selon l'une quelconque des revendications 1 à 4 caractérisée en ce que l'épaisseur de la dite âme est comprise entre 30 et 90 µ environ.

6. Étoffe selon l'une quelconque des revendications précédentes caractérisée en ce que le dit traitement métallurgique comprend au moins un traitement choisi dans le groupe comprenant une opération thermique de recuisson, un dégraissage, une anodisation, une désoxydation et les mélanges de ces traitements.

7. Étoffe selon l'une quelconque des revendications précédentes caractérisée le dit revêtement est obtenu par une technique de flocage.

8. Étoffe selon l'une quelconque des revendications précédentes caractérisée en ce que la dite âme est, d'abord, recouverte, au moins partiellement, d'un film en une matière plastique, tel du polyéthylène de haute densité, d'une épaisseur de 0,05 mm environ, le dit film adhérant à la dite âme.

9. Étoffe selon l'une quelconque des revendications précédentes caractérisée en ce que le dit métal non ferreux est d'un type de pureté très élevée choisi dans le groupe comprenant l'aluminium, le cuivre, l'étain, le bronze, le laiton, l'argent, l'or, le béryllium et les alliages de ceux-ci.

10. Étoffe selon l'une quelconque des revendications précédentes caractérisée en ce que le collage du dit revêtement sur la dite âme est effectué au moyen d'un adhésif acrylique, par pulvérisation d'un solvant et d'un élastomère, par collage chimique ou par thermo-collage.

## Claims

1. Fabric exhibiting a laminated structure comprising pliant materials, such as skin, woven cloth and/or paper, and at least one material, said fabric being able to be deformed by hand without pring-back or plastic recovery, said structure comprising :
- a substantially planar metallic core essentially comprising a non-ferrous material, and
- a coating of said pliant materials bonded on each side of said core,
characterized in that
said core has a thickness less than 0,15 mm providing consistency for rigidity, and the thickness and metallurgical treatment of which are adapted to the weight of said pliants.

2. Fabric according to Claim 1, characterized in that said metallic core is formed by a sheet of said non-ferrous metal.

3. Fabric according to claim 2, characterized in that said sheet is made in the from of a simple or woven grid.

4. Fabric according to Claim 1, characterized in that said core is formed by a layer of particulate metallic elements, of the type comprising flakes, lamellae, shims or single wires, embedded in a pliant binder.

5. Fabric according to any one of Claims 1 to 4, characterized in that the thickness of said core is between approximately 30 and 90 µm.

6. Fabric according to any one of the preceding claims, characterized in that said metallurgical treatment comprises at least one treatment chosen from the group comprising a thermal annealing operation, degreasing, anodization, deoxidation and mixtures of these treatments.

7. Fabric according to any one of the preceding claims, characterized in that said coating is obtained by a flocking technique.

8. Fabric according to any one of the preceding claims, characterized in that said core is firstly covered, at least partially, with a film made of a plastic such as a high-density polyethylene having a thickness of approximately 0.05 mm, said film adhering to said core.

9. Fabric according to any one of the preceding claims, characterized in that said non-ferrous metal is of very high purity type, chosen from the group comprising aluminum, copper, tin, bronze, brass, silver, gold, beryllium and alloys of these.

10. Fabric according to any one of the preceding claims, characterized in that the bonding of said coating to said core is carried out by means of an acrylic adhesive, by spraying a solvent and elastomer, by chemical bonding or by thermobonding.

## Patentansprüche

1. Stoff mit Schichtstruktur, enthaltend geschmeidige Materialien wie Leder, Gewebe und/oder Papier sowie mindestens ein metallisches Material, wobei der Stoff ohne elastische oder plastische Rückbildung manuell verformbar ist, und die Struktur folgendes enthält:
- ein mehr oder weniger ebenes metallisches Innenblatt, das im wesentlichen aus einem Nichteisenmetall besteht, sowie
- einen auf beiden Seiten des Innenblatts aufgeklebten Überzug aus den geschmeidigen Materialien, dadurch gekennzeichnet, daß das Innenblatt eine Dicke von weniger als 0,15 mm besitzt und so dem Stoff geschmeidige Steifheit verleiht, wobei dessen Dicke und die metallurgische Behandlung an das Gewicht der geschmeidigen Materialien angepaßt sind.

2. Stoff nach Anspruch 1, dadurch gekennzeichnet, daß das metallische Innenblatt aus einem Nichteisenmetallblatt besteht.

3. Stoff nach Anspruch 2, dadurch gekennzeichnet, daß das Blatt in Form eines einfachen oder gewebten Netzes ausgeführt ist.

4. Stoff nach Anspruch 1, dadurch gekennzeichnet, daß das Innenblatt aus einer Schicht aus metallischen Elementen in Teilchenform des schuppenförmigen, lamellenförmigen oder folienartigen Typs bzw. in Form einfacher Drähte besteht, die in ein geschmeidiges Bindemittel eingebettet sind.

5. Stoff nach einem der Ansprüche 1 bis 4, dadurch gekennzeichnet, daß die Dicke des Innenblatts zwischen etwa 30 und 90 µ beträgt.

6. Stoff nach einem der vorhergehenden Ansprüche, dadurch gekennzeichnet, daß die metallurgische Behandlung mindestens eine Behandlung umfaßt, die ausgewählt ist aus der Gruppe bestehend aus einer Wiedererwärmungsbehandlung, Entfettung, Anodisierung, Desoxidation und Kombinationen dieser Behandlungen.

7. Stoff nach einem der vorhergehenden Ansprüche, dadurch gekennzeichnet, daß der Überzug nach einem Flockungsverfahren hergestellt wird.

8. Stoff nach einem der vorhergehenden Ansprüche, dadurch gekennzeichnet, daß das Innenblatt zuerst zumindest teilweise mit einem Film aus Kunststoff, wie z.B. Niederdruck-Polyethylen, in einer Dicke von etwa 0,05 mm überzogen wird, wobei der Film am Innenblatt haftet.

9. Stoff nach einem der vorhergehenden Ansprüche, dadurch gekennzeichnet, daß das Nichteisenmetall vom Typ hochreines Nichteisenmetall ist und aus der Gruppe bestehend aus Aluminium, Kupfer, Zinn, Bronze, Messing, Silber, Gold, Beryllium und deren Legierungen ausgewählt ist.

10. Stoff nach einem der vorhergehenden Ansprüche, dadurch gekennzeichnet, daß das Verkleben des Überzugs auf dem Innenblatt mittels eines Acrylklebstoffs durch Versprühen eines Lösungsmittels und eines Elastomers, durch chemisches Verkleben oder durch Heißverkleben erfolgt.
